# EUROPÄISCHE PATENTSCHRIFT

(11) **EP 1 334 898 B1**
(45) Veröffentlichungstag und Bekanntmachung des Hinweises auf die Patenterteilung: **11.08.2004**
(21) Anmeldenummer: 02028395.8
(22) Anmeldetag: 18.12.2002
(51) Int. Cl.: B62D 1/18, B62D 1/19

(54) **Lenksäulenanordnung für ein Kraftfahrzeug**
Steering column arrangement for a motor vehicle
Colonne de direction pour véhicule automobile

(30) Priorität: 31.01.2002 DE 10203917
(43) Veröffentlichungstag der Anmeldung: 13.08.2003
(73) Patentinhaber: DaimlerChrysler AG, 70567 Stuttgart (DE)
(72) Erfinder: Kahlenberg, Matthias, 71034 Böblingen (DE); Knoll, Karl-Heinz, 71384 Weinstadt (DE); Niemöller, Jürgen, 71067 Sindelfingen (DE); Rauner, Franz, 71384 Weinstadt (DE)

(56) Entgegenhaltungen:
- DE-A- 4 030 405
- DE-C- 19 524 196
- DE-C- 19 812 179
- GB-A- 1 445 895

## Beschreibung

Die Erfindung betrifft eine Lenksäulenanordnung für ein Kraftfahrzeug gemäß dem Oberbegriff des Patentanspruchs 1.

Eine solche Lenksäulenanordnung ist aus der DE 195 24 196 C1 bekannt. Die bekannte Lenksäulenanordnung weist eine ein Lenkrad tragende Lenkspindel auf, die in einem inneren Mantelrohr drehbeweglich gelagert ist. Das innere Mantelrohr ist in einem äußeren Mantelrohr teleskopförmig verschiebbar gelagert, wobei das äußere Mantelrohr an der Karosserietragstruktur des Kraftfahrzeugs festgelegt ist. Zur Verschiebung des inneren Mantelrohres gegenüber dem äußeren Mantelrohr ist eine Verstellvorrichtung vorgesehen, die als durch einen Elektromotor betätigtes Stellglied in Form eines Spindeltriebs gestaltet ist. Der Spindeltrieb weist eine achsparallel zur Lenkachse der Lenkspindel außen längs des äußeren und des inneren Mantelrohres verlaufende Stellspindel auf, die mittels einer Halterung an einem Stirnende ortsfest am inneren Mantelrohr festgelegt ist. Im Bereich des äußeren Mantelrohres sitzt auf der als Gewindespindel gestalteten Stellspindel eine Gewindemutter, die zwischen zwei energieabsorbierend gestalteten Lagerböcken gelagert ist. Auf die Gewindemutter wirkt über ein entsprechendes Zahnradgetriebe der elektrische Stellmotor. Bei einer Aufprallbelastung auf das Kraftfahrzeug kann zusätzliche Aufprallenergie im Bereich der Verstellvorrichtung aufgenommen werden, indem die energieabsorbierenden Lagerböcke durch die Krafteinleitung über die Stellspindel plastisch deformiert werden.

Aus der DE 198 12 179 C1 ist eine weitere Lenksäulenanordnung bekannt, bei der Aufprallenergie durch die Verstellvorrichtung aufgenommen wird. Diese unterscheidet sich von der zuvor beschriebenen Anordnung dadurch, dass das längs der Lenksäulenachse verlaufende Stellglied mit einer Sollknickstelle versehen ist und dass auf Höhe der Sollknickstelle ein ortsfest am inneren Mantelrohr angeordneter, die Sollknickstelle zumindest teilweise überbreifender Stützbügel vorgesehen ist, der plastisch verformbar gestaltet ist.

Der vorliegenden Erfindung liegt die Aufgabe zugrunde, eine Lenksäulenanordnung der eingangs genannten Art zu schaffen, die ein anderes Prinzip einer Sicherheitslenksäule verwirklicht, bei der Aufprallenergie im Bereich der Verstellvorrichtung absorbiert wird.

Diese Aufgabe wird erfindungsgemäß durch eine Lenksäulenanordnung mit den Merkmalen des Patentanspruchs 1 gelöst.

Demnach zeichnet sich die Erfindung dadurch aus, dass die Energieabsorption nicht im Bereich des Stellgliedes der Verstellvorrichtung sondern im Bereich deren Antriebseinheit erfolgt. Dazu ist die Antriebseinheit lösbar an einer Führungseinrichtung befestigt, entlang welcher sie unter Energieabsorption verschiebbar gelagert ist. Die Erfindung bringt den Vorteil mit sich, dass die Aufnahme der Energie mit einer definierten Bewegung der Antriebseinheit entlang der Führungseinrichtung einhergeht. Bei der Erfindung ist die Bewegungsrichtung eindeutig durch die Führungseinrichtung vorgegeben und dadurch vorherbestimmbar. Hinzu kommt, dass weil die Energieabsorption während der Bewegung der Antriebseinheit relativ zu der Führungseinrichtung, also während einer definierten Bewegung, erfolgt, das Maß und der Verlauf der Energieabsorption besonders einfach und genau eingestellt werden können.

Die Führungseinrichtung kann einem Mantelrohr, beispielsweise dem äußeren Mantelrohr zugeordnet sein. Das äußere Mantelrohr ist in der Regel fahrzeugfest angeordnet. Diese Ausführung bringt besondere Vorteile für die Herstellung mit sich, weil sie eine einfache Montage der Führungseinrichtung an dem Mantelrohr ermöglicht, da dieses einfach zugänglich ist. Es ist natürlich auch denkbar, die Führungseinrichtung einem anderen Fahrzeugbauteil zuzuordnen. Voraussetzung ist, dass sich dieses Bauteil bei einer auf die Lenksäulenanordnung aufgebrachten Kraft nicht bewegt, sondern fahrzeugfest angeordnet ist.

Gemäß einer Ausführungsform besteht die Führungseinrichtung aus mindestens einer in Längsrichtung der Lenksäulenanordnung ausgerichteten Schiene. Die Ausrichtung in Längsrichtung bringt den Vorteil mit sich, dass sich die Antriebseinheit ebenfalls entlang der Längsrichtung der Lenksäulenanordnung definiert bewegt. Eine Führungseinrichtung, die eine Bewegung der Antriebseinheit in eine andere Richtung ermöglicht, ist auch denkbar, würde aber einen größeren Bauraum beanspruchen.

Aus Kostengesichtspunkten ist es günstig, die Führungseinrichtung mit dem Mantelrohr einstückig auszubilden, weil man in diesem Fall den Montageaufwand spart, die Führungseinrichtung an dem Mantelrohr zu befestigen. Selbstverständlich ist auch eine mehrteilige Ausführung denkbar.

Die Antriebseinheit kann der Führungseinrichtung zugeordnete Aufnahmen aufweisen. Über die Gestaltung dieser Aufnahmen ist es möglich die Widerstandskraft festzulegen, die einer Verschiebung der Antriebseinheit entlang der Führungseinrichtung entgegengesetzt wird. Über die Aufnahmen kann also - mit anderen Worten - das Maß der Energieabsorption auf besonders einfache Art und Weise beeinflusst werden.

Die Befestigung der Antriebseinheit an der Führungseinrichtung kann so ausgelegt sein, dass sie bei Überschreiten eines vorbestimmten Kraftniveaus, welches auf die Lenksäulenanordnung aufgebracht wird, versagt. Diese Ausführungsform stellt eine besonders einfache Art der Aktivierung der Verlagerung der Antriebseinheit und eine einfache Art der Aktivierung der Energieabsorption dar. Es ist auch denkbar, dass die Befestigung in Abhängigkeit von von Sensoren erfassten Größen, beispielsweise bestimmter Beschleunigungswerte, gelöst wird.

Zudem ist es denkbar, der Antriebseinheit ein zusätzliches Energieabsorptionselement zuzuordnen, welches ebenfalls dann aktiviert wird, wenn sich die Antriebseinheit relativ zu der Führungseinrichtung verschiebt. Dadurch kann das Maß der Energieabsorption nochmals gesteigert werden. Je nach dem was für ein Energieabsorptionselement gewählt wird, kann zudem der Verlauf der Energieabsorption genau eingestellt werden.

Als Energieabsorptionselement kann beispielsweise ein Metallelement eingesetzt werden, welches während es verformt wird, Energie aufnimmt. Derartige Energieabsorptionselemente sind hinlänglich bekannt und bringen den Vorteil mit sich, dass ihr Verformungsverhalten und die dazu benötigte bzw. absorbierte Energie genau berechnet werden kann. Auf diese Weise kann das Maß der Energieabsorption sehr genau vorherbestimmt bzw. eingestellt werden.

Das Energieabsorptionselement kann beispielsweise aus einem Draht bestehen. Ein Draht beansprucht wenig Platz, was sich günstig auf den Bauraum auswirkt. Es ist weiterhin denkbar, ein Ende des Drahtes an der Antriebseinheit zu befestigen, so dass auf den Draht in dem Moment eine Kraft ausgeübt wird, in dem sich die Antriebseinheit in Bewegung setzt. Wenn der Draht um ein Hindernis geführt ist, wird er um dieses in dem Moment herumgezogen, in dem die Kraft auf ihn ausgeübt wird und er verformt sich dabei. Über diese Verformung wird Energie abgebaut. Verlauf und Höhe der Energieabsorption lassen sich über Werkstoff und Ausmaße (Querschnitt) des Drahtes sehr einfach einstellen.

Im folgenden wird die Erfindung anhand dem in den Zeichnungen dargestellten Ausführungsbeispiel des näheren erläutert.

Es zeigen:
- Fig. 1:: eine Lenksäulenanordnung mit einer erfindungsgemäß angeordneten Antriebseinheit vor einem Crash sowie
- Fig. 2:: eine Lenksäulenanordnung gemäß Fig. 1 nach einem Crash.

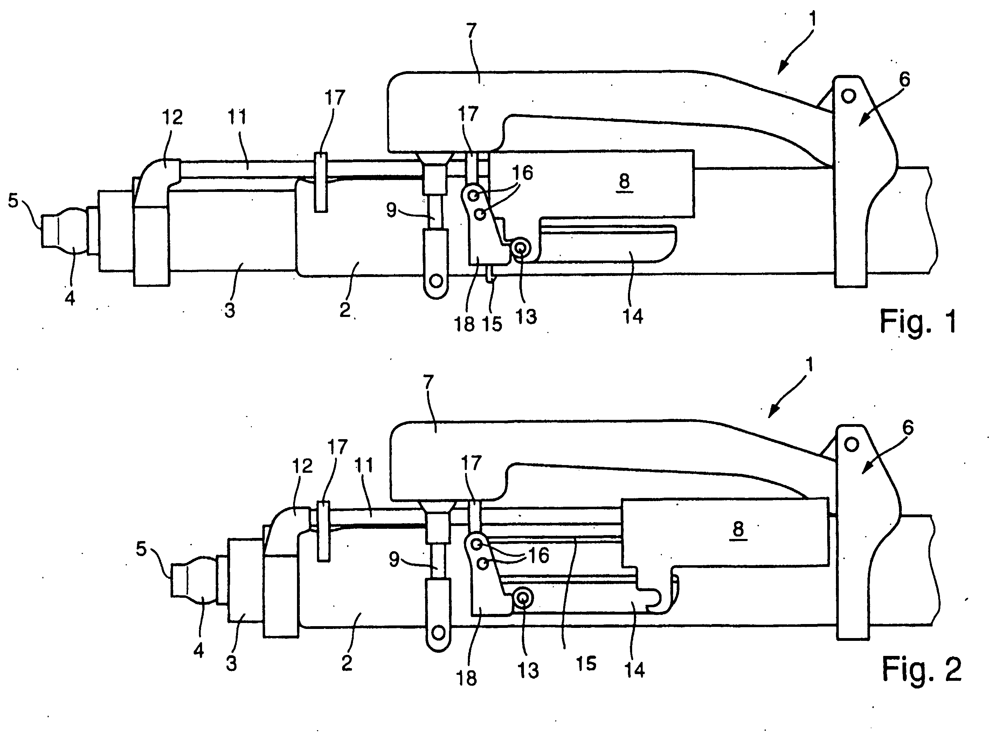

In Fig. 1 ist eine Lenksäulenanordnung 1 dargestellt, die ein äußeres Mantelrohr 2 und ein inneres Mantelrohr 3 aufweist. In den Mantelrohren 2 und 3 ist eine Lenkspindel 4 koaxial angeordnet und drehbar gelagert. An deren aus dem inneren Mantelrohr 3 herausragenden Ende befindet sich ein Anschluss 5 für ein nicht dargestelltes Lenkrad. An dem dem Anschluss 5 entgegengesetzten Ende der Lenksäulenanordnung 6 ist das äußere Mantelrohr 2 an einer Konsole 7 angelenkt, welche wiederum fahrzeugfest angeordnet ist.

Bei der dargestellten Lenksäulenanordnung 1 handelt es sich um eine zu Komfortzwecken verstellbare Lenksäule. Der Antrieb für die Komforteinstellung erfolgt über Antriebseinheiten, die in aus dem zuvor gewürdigten Stand der Technik bekannter Weise mit Stellgliedern in Form von Gewindespindeln zusammenwirken. Dazu ist eine Gewindespindel 9 für die Höhenverstellung vorgesehen. Die Gewindespindel 9 wird durch eine nicht dargestellte Motor-/Getriebeeinheit angetrieben. Die Spindel 9 ist an der Konsole 7 angelenkt und greift am äußeren Mantelrohr 2 an. Im Zusammenhang mit der vorliegenden Erfindung spielt die Gewindespindel 9 keine Rolle.

Für die Längsverstellung ist eine weitere Gewindespindel 11 vorgesehen, welche über einen Halter 12 am inneren Mantelrohr 3 und am aus dem inneren Mantelrohr 3 herausragenden Teil der Lenkspindel 4 angreift. Die Spindel 9 wird durch die Motor-/Getriebeeinheit 8 angetrieben. Sowohl die Lenkspindel 4 als auch das aus innerem und äußerem Mantelrohr 2 und 3 bestehende Mantelrohr sind teleskopisch ausgeführt. Bei einer Veränderung der Länge der Lenksäulenanordnung bewegt sich somit das innere Mantelrohr 3 in dem äußeren Mantelrohr 2.

Der Motor-/Getriebeeinheit 8 ist eine Führungseinrichtung in Form vom Leitflächen 14 zugeordnet. In Fig. 1 ist eine Leitfläche 14 dargestellt. Auf der anderen Seite der Motor-/Getriebeeinheit 8 - hier durch die Lenksäulenanordnung 1 verdeckt - ist eine entsprechende Leitfläche vorgesehen. Die Motor-/Getriebeeinheit 8 ist über Befestigungselemente 13, die auf den Leitflächen 14 angeordnet sind, mit dem äußeren Mantelrohr 2 verbunden. Sie greifen in eine spezielle Ausnehmung der Motor-/Getriebeeinheit ein, die ein herausschieben der Motor-/Getriebeeinheit 8 aus der Befestigung ermöglicht. Die Ausnehmung in Form einer Bohrung weist dazu eine entgegen der Verschieberichtung ausgerichtete Öffnung auf. Die Bohrung kann auch geschlossen ausgebildet sein und im Falle einer Krafteinwirkung aufreißen.

Des weiteren sind Führungsaugen 17 vorgesehen, durch die die Gewindespindel 11 geführt ist. Die Führungsaugen 17 sind auf das äußere Mantelrohr 2 aufgebracht und weisen Ausnehmungen zur Aufnahme und Führung der Gewindespindel 11 auf.

An der Motor-/Getriebeeinheit 8 ist ein Draht 15 befestigt, welcher in Fig. 1 hinter einem Verschlag 18 um zwei Bolzen 16 geführt ist. Der restliche Draht 15 wird unten um das Mantelrohr herum geführt. Dies ist in Fig. 1 ersichtlich. Dieser restliche Draht bildet einen Drahtvorrat für den Vorgang der Energieabsorption.

Wenn nun im Falle eines Unfalls eine Kraft in Richtung des Pfeils A auf die Lenksäulenanordnung 1 gegeben wird, und diese Kraft ein gewisses, vorbestimmtes Maß überschreitet, so wird diese Kraft über das nicht dargestellte Lenkrad und die Lenkspindel 4 auf das innere Mantelrohr 3 und von dort weiter auf die Gewindespindel 11 übertragen. Die Gewindespindel 11 wiederum leitet die Kraft A weiter auf die Motor-/Getriebeeinheit 8. Das hat zur Folge, dass die Kraft an dem Befestigungspunkt 13 angreift, der so ausgelegt ist, dass er bei Überschreiten einer vorbestimmten Kraft versagt. Sobald die Befestigungen 13 gelöst sind, bewirkt die Kraft ein Verschieben der Motor-/Getriebeeinheit 8 entlang der Leitflächen 14. Mit der Motor-/Getriebeeinheit 8 und der damit verbundenen Gewindespindel 11 verschiebt sich auch das innere Mantelrohr 3 sowie die Lenkspindel 4 mit dem nicht dargestellten Lenkrad. Die Führungsaugen 17 bieten den aufgrund einer Krafteinwirkung verschobenen Bauteilen über die Gewindespindel 11 eine zusätzliche Führung.

Zur Bewegung der Motor-/Getriebeeinheit 8 entlang der Leitflächen 14 muss Reibung überwunden werden. Je nach dem wie groß diese Reibung ist, wird mehr oder weniger Energie zum Verschieben der Motor-/Getriebeeinheit 8 entlang der Leitflächen 14 benötigt - also absorbiert. Um die Energieabsorption zu erhöhen ist der Draht 15 vorgesehen. Es ist auch denkbar, dass die Energieabsorbtion ausschließlich über den Draht 15 erfolgt. Sobald sich die Motor-/Getriebeeinheit 8 in Bewegung setzt, wird ein Teil der Kraft A in den Draht 15 eingeleitet, wodurch dieser um die Bolzen 16, um die er herumgeführt ist, gezogen wird. Bei dieser Bewegung wird der Draht 15 verformt. Bei dieser Verformung wird ebenfalls Energie abgebaut. Wenn Draht mit konstantem Durchmesser vorgesehen ist, so ist das Kraftniveau der bei der Bewegung der Motor-/Getriebeeinheit absorbierten Energie konstant - und zwar über den gesamten Weg. Der Durchmesser des Drahtes stellt eine einfache Möglichkeit dar, das Maß der Energieabsorption bzw. deren Verlauf über den Weg zu beeinflussen. Somit kann über die Eigenschaften des Drahtes 15 die Energieabsorption vorher besonders einfach eingestellt werden.

Ein weiterer Vorteil der Erfindung ist darin zu sehen, dass die Bewegung der Motor-/Getriebeeinheit 8 durch die Leitflächen 14 geführt und damit definiert erfolgt. Das macht es möglich, den benötigten Bau- und Bewegungsraum sehr genau vorherzubestimmen.

## Patentansprüche

1. Lenksäulenanordnung mit
- einem äußeren Mantelrohr sowie
- einem in dem äußeren Mantelrohr verschiebbaren inneren Mantelrohr und
- einer zwischen den beiden Mantelrohren wirksamen Verstellvorrichtung zum Verschieben eines Mantelrohres gegenüber dem anderen Mantelrohr, die eine Antriebseinheit und ein Stellglied aufweist,
**dadurch gekennzeichnet, dass** die Antriebseinheit (8) an einer Führungseinrichtung (14) lösbar befestigt ist und dass die Antriebseinheit entlang der Führungseinrichtung verschiebbar gelagert ist.

2. Lenksäulenanordnung nach Anspruch 1,
**dadurch gekennzeichnet, dass** die Führungseinrichtung (14) einem Mantelrohr zugeordnet ist.

3. Lenksäulenanordnung nach Anspruch 1 oder 2,
**dadurch gekennzeichnet, dass** die Führungseinrichtung (14) dem äußeren Mantelrohr (2) zugeordnet ist.

4. Lenksäulenanordnung nach einem der vorhergehenden Ansprüche,
**dadurch gekennzeichnet, dass** die Führungseinrichtung (14) aus mindestens einer in Längsrichtung der Lenksäulenanordnung (1) ausgerichteten Schiene (14) besteht.

5. Lenksäulenanordnung nach einem der vorhergehenden Ansprüche,
**dadurch gekennzeichnet, dass**
die Führungseinrichtung (14) einstückig mit dem äußeren Mantelrohr (2) ausgebildet ist.

6. Lenksäulenanordnung nach einem der vorhergehenden Ansprüche,
**dadurch gekennzeichnet, dass**
die Antriebseinheit (8) der Führungseinrichtung (14) zugeordnete Aufnahmen aufweist.

7. Lenksäulenanordnung nach einem der vorhergehenden Ansprüche,
**dadurch gekennzeichnet, dass**
die Befestigung (13) der Antriebseinheit (8) an der Führungseinrichtung (14) so ausgelegt ist, dass sie bei Aufbringen einer Kraft (A) auf die Lenksäulenanordnung (1), die ein vorbestimmtes Maß überschreitet, versagt.

8. Lenksäulenanordnung nach einem der vorhergehenden Ansprüche,
**dadurch gekennzeichnet, dass**
dem Stellglied (11) Führungselemente (17) zugeordnet sind.

9. Lenksäulenanordnung nach einem der vorhergehenden Ansprüche,
**dadurch gekennzeichnet, dass**
der Antriebseinheit (8) ein Energieabsorptionselement (15) zugeordnet ist.

10. Lenksäulenanordnung nach Anspruch 9,
**dadurch gekennzeichnet, dass**
das Energieabsorptionselement (15) aus Metall besteht, welches bei Verformung Energie absorbiert.

11. Lenksäulenanordnung nach Anspruch 9 oder 10,
**dadurch gekennzeichnet, dass**
das Energieabsorptionselement (15) aus Draht besteht.

12. Lenksäulenanordnung nach Anspruch 11,
**dadurch gekennzeichnet, dass**
der Draht (15) mit einem Ende an der Antriebseinheit (8) befestigt ist.

13. Lenksäulenanordnung nach Anspruch 11 oder 12,
**dadurch gekennzeichnet, dass**
der Draht (15) um mehrere Bolzen (16) geführt ist.

## Claims

1. Steering column arrangement with
- an outer steering column tube and
- an inner steering column tube slidable in the outer steering column tube and
- an adjusting mechanism acting between the two steering column tubes for displacing one steering column tube relative to the other steering column tube, having a drive unit and an actuator,
**characterised in that**
the drive unit (8) is releasably affixed to a guide system (14) and the drive unit is mounted so as to be slidable along the guide system.

2. Steering column arrangement as claimed in claim 1,
**characterised in that**
the guide system (14) is mounted on a steering column tube.

3. Steering column arrangement as claimed in claim 1 or 2,
the guide system (14) is mounted on the outer steering column tube (2).

4. Steering column arrangement as claimed in one of the preceding claims,
**characterised in that**
the guide system (14) consists of at least one rail (14) oriented in the longitudinal direction of the steering column arrangement (1).

5. Steering column arrangement as claimed in one of the preceding claims,
**characterised in that**
the guide system (14) is of an integral design with the outer steering column tube (2).

6. Steering column arrangement as claimed in one of the preceding claims,
**characterised in that**
the drive unit (8) has mounts co-operating with the guide system (14).

7. Steering column arrangement as claimed in one of the preceding claims,
**characterised in that**
the fixing means (13) of the drive unit (8) on the guide system (14) is designed so that it fails when a force (A) applied to the steering column arrangement (1) exceeds a predefined level.

8. Steering column arrangement as claimed in one of the preceding claims,
**characterised in that**
guide elements (17) co-operate with the actuator (11).

9. Steering column arrangement as claimed in one of the preceding claims,
**characterised in that**
an energy-absorbing element (15) co-operates with the drive unit (8).

10. Steering column arrangement as claimed in claim 9,
**characterised in that**
the energy-absorbing element (15) is made from metal and absorbs energy on deformation.

11. Steering column arrangement as claimed in claim 9 or 10,
**characterised in that**
the energy-absorbing element (15) is a wire.

12. Steering column arrangement as claimed in claim 11,
**characterised in that**
the wire (15) is attached at one end to the drive unit (8).

13. Steering column arrangement as claimed in claim 11 or 12,
**characterised in that**
the wire (15) is guided round several pins (16).

## Revendications

1. Colonne de direction dotée
- d'un tube enjoliveur extérieur ainsi que
- d'un tube enjoliveur intérieur pouvant se déplacer dans le tube enjoliveur extérieur et
- d'un dispositif de réglage agissant entre les deux tubes enjoliveurs afin de déplacer un tube enjoliveur par rapport à l'autre, lequel dispositif comporte un organe de commande et un vérin,
**caractérisée en ce que** l'organe de commande (8) est fixé de manière amovible sur un dispositif de guidage (14) et **en ce que** l'organe de commande peut être déplacé le long du dispositif de guidage.

2. Colonne de direction selon la revendication 1 **caractérisée en ce que** le dispositif de guidage (14) est associé à un tube enjoliveur.

3. Colonne de direction selon la revendication 1 ou 2, **caractérisée en ce que** le dispositif de guidage (14) est associé au tube enjoliveur extérieur (2).

4. Colonne de direction selon l'une quelconque des revendications précédentes, **caractérisée en ce que** le dispositif de guidage (14) se compose d'au moins une ligne principale de transmission (14) orientée dans le sens longitudinal de la colonne de direction (1).

5. Colonne de direction selon l'une quelconque des revendications précédentes, **caractérisée en ce que** le dispositif de guidage (14) est formé d'un seul tenant avec le tube enjoliveur extérieur (2).

6. Colonne de direction selon l'une quelconque des revendications précédentes, **caractérisée en ce que** l'organe de commande (8) comporte des logements associés au dispositif de guidage (14).

7. Colonne de direction selon l'une quelconque des revendications précédentes, **caractérisée en ce que** le dispositif de fixation (13) de l'organe de commande (8) est placé sur le dispositif de guidage (14) de manière à lâcher si une force (A) supérieure à une force prédéfinie s'exerce sur la colonne de direction (1).

8. Colonne de direction selon l'une quelconque des revendications précédentes, **caractérisée en ce que** des éléments de guidage (17) sont associés au vérin (11).

9. Colonne de direction selon l'une quelconque des revendications précédentes, **caractérisée en ce qu'**un élément absorbant l'énergie (15) est associé à l'organe de commande (8).

10. Colonne de direction selon la revendication 9, **caractérisée en ce que** l'élément absorbant l'énergie (15) se compose d'un métal qui absorbe l'énergie en cas de déformation.

11. Colonne de direction selon la revendication 9 ou 10, **caractérisée en ce que** l'élément absorbant l'énergie (15) est en fil métallique.

12. Colonne de direction selon la revendication 11, **caractérisée en ce qu'**une extrémité du fil métallique (15) est fixée à l'organe de commande (8).

13. Colonne de direction selon la revendication 11 ou 12, **caractérisée en ce que** le fil métallique (15) est amené autour de plusieurs goujons(16).
